# FASCICULE DE BREVET EUROPEEN

(11) **EP 0 642 207 B1**
(45) Date de publication et mention de la délivrance du brevet: **07.01.1998**
(21) Numéro de dépôt: 94401934.8
(22) Date de dépôt: 31.08.1994
(51) Int. Cl.: H02K 7/116, H02K 7/08, H02K 9/04, F16H 57/04, F16H 57/02, H02K 9/14

(54) **Ensemble moto-réducteur**
Getriebemotorantrieb
Geared motor unit

(30) Priorité: 02.09.1993 FR 9310470
(43) Date de publication de la demande: 08.03.1995
(73) Titulaire: GEC ALSTHOM TRANSPORT SA, 75016 Paris (FR)
(72) Inventeur: Nast, Jean-Daniel, F-71200 Le Creusot (FR)
(74) Mandataire: Fournier, Michel

(56) Documents cités:
- EP-A- 0 084 184
- EP-A- 0 192 469
- EP-A- 0 601 433
- CH-A- 133 020
- DE-A- 2 644 414
- DE-A- 4 106 666
- DE-U- 9 115 647
- FR-A- 2 139 329
- GB-A- 2 185 551
- GB-A- 2 201 298
- US-A- 1 860 703
- US-A- 2 173 339
- US-A- 2 998 539
- US-A- 3 001 409
- US-A- 3 056 054

## Description

La présente invention concerne les machines électriques tournantes, en général, et porte plus particulièrement sur un ensemble moto-réducteur.

Lorsque des vitesses de rotation très élevées sont impliquées dans des moteurs électriques tels que des ensembles moto-réducteur, un maximum de résistance aux élévations de température et des performances accrues des produits de lubrification sont d'importance majeure pour le bloc de roulement.

Dans les ensembles moto-réducteur de l'art antérieur, la vitesse de rotation maximale compatible avec la sécurité est souvent limitée par la lubrification des blocs de roulement.

Les blocs de roulement des ensembles moto-réducteur de l'art antérieur sont lubrifiés par graissage. Les graisses utilisées ne peuvent cependant pas permettre des vitesses de rotation élevées du moteur.

Les documents EP-A-0 601 433 et EP-A-0 084 184 de l'état de la technique décrivent un ensemble moto-réducteur conforme au préambule de la revendication 1.

C'est le mérite de la demanderesse que de proposer un ensemble moto-réducteur dont la structure et l'agencement des différents éléments permettent d'atteindre des vitesses de rotation élevées du moteur, à savoir: au delà de 4000 tr/mn, sans augmenter la température des blocs de roulement.

Un autre but de l'ensemble moto-réducteur de l'invention est une meilleure ventilation du bloc de roulement.

L'invention a pour objet un ensemble moto-réducteur comprenant:
- un moteur circulaire dont l'arbre d'entraînement est couplé à un pignon moteur dans le but de transmettre le mouvement de rotation de l'arbre d'entraînement à un pignon de sortie par l'intermédiaire d'une roue intermédiaire couplée audit pignon moteur et audit pignon de sortie,
- un premier et un second bloc de roulements disposés sur l'arbre d'entraînement, respectivement, de part et d'autre du moteur circulaire,
- un flasque du moteur, disposé autour dudit moteur circulaire, maintenant ledit premier bloc de roulements, et
- un flasque du réducteur disposé autour desdits pignons moteur et de sortie et de ladite roue intermédiaire,
- lesdits premier et second bloc de roulements étant disposés, respectivement, de part et d'autre du moteur circulaire et du pignon moteur,
- ledit second bloc de roulement étant maintenu par ledit flasque du réducteur, et
- ledit flasque du réducteur étant refroidi par ventilation forcée,
caractérisé en ce que ledit flasque du réducteur est refroidi par une partie de la ventilation forcée dudit flasque du moteur.

Conformément à une caractéristique secondaire de l'ensemble moto-réducteur, sa partie supérieure est refroidie par ventilation forcée et sa partie inférieure est refroidie par ventilation naturelle.

L'ensemble moto-réducteur selon d'autres caractéristiques secondaires comprend:
- des ailettes de refroidissement dans la partie inférieure dudit flasque du réducteur,
- un premier capot de ventilation sur la partie supérieure dudit flasque du réducteur et un second capot de ventilation sur la partie supérieure dudit flasque du moteur,
- un joint frontal maintenu entre les faces desdits flasques du moteur et du réducteur en contact.

Un avantage de l'ensemble moto-réducteur conforme à l'invention spécifique à la structure et à l'agencement des différents éléments de l'ensemble est la possibilité de pouvoir lubrifier le bloc de roulement par des moyens différents des moyens mis en oeuvre dans l'art antérieur.

Un autre avantage de l'ensemble moto-réducteur conforme à l'invention également spécifique à la structure et à l'agencement des différents éléments de l'ensemble est une ventilation du bloc de roulement simple et efficace.

D'autres buts, caractéristiques et avantages de l'invention apparaîtrons à la lecture de la description d'un mode de réalisation préféré de l'ensemble moto-réducteur, description faite en liaison avec les dessins dans lesquels:
- la figure 1 est une vue longitudinale en coupe de l'ensemble moto-réducteur de l'invention, et
- la figure 2 est une vue de la face du flasque du réducteur disposée côté moteur.

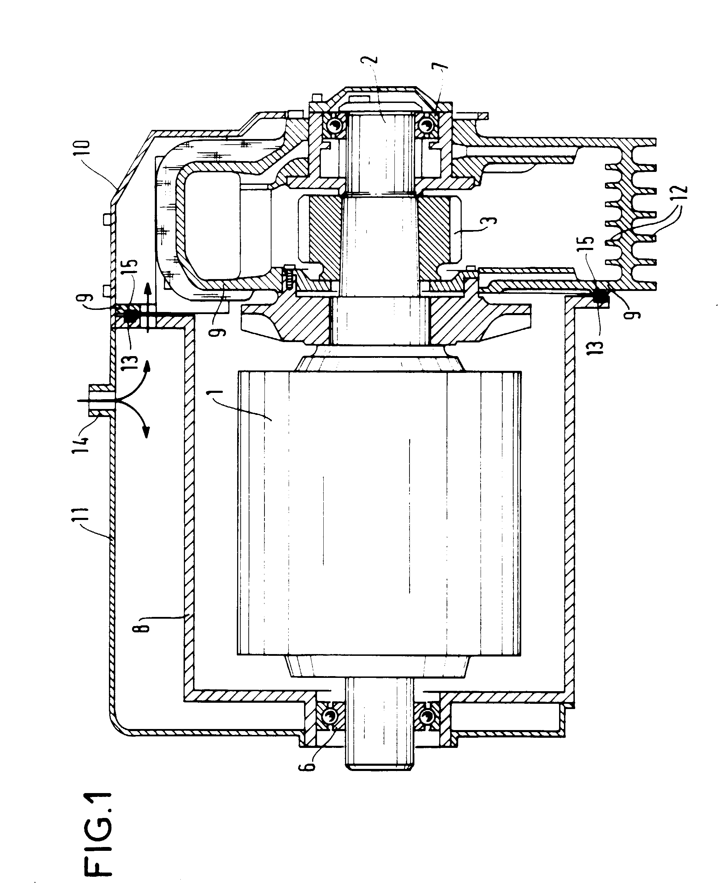

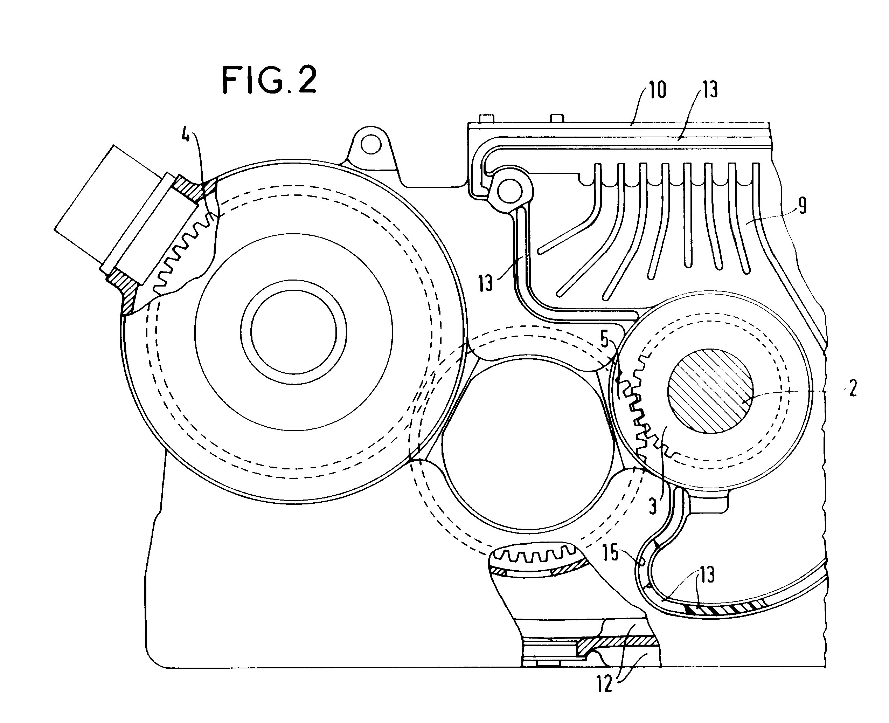

L'ensemble moto-réducteur représenté à la figure 1, selon une vue longitudinale en coupe, comprend un moteur circulaire 1 dont l'arbre d'entraînement 2 est couplé à un pignon moteur 3 dans le but de transmettre le mouvement de rotation de l'arbre d'entraînement à un pignon de sortie 4 (figure 2) par l'intermédiaire d'une roue intermédiaire 5 (figure 2) couplée au pignon moteur et au pignon de sortie.

Un premier 6 et un second 7 bloc de roulement sont disposés sur l'arbre d'entraînement, respectivement, de part et d'autre du moteur circulaire.

Un premier flasque 8 est disposé autour du moteur circulaire. Le flasque du moteur maintient le premier bloc de roulement de telle manière que l'axe longitudinal de symétrie du roulement associé au premier bloc de roulement soit confondu avec l'axe de rotation du moteur.

Un second flasque 9 est disposé autour des pignons moteur et de sortie et de ladite roue intermédiaire.

Conformément à une caractéristique essentielle de l'ensemble moto-réducteur de l'invention, les premier et second bloc de roulement sont disposés, respectivement, de part et d'autre du moteur circulaire et du pignon moteur.

Pour ce faire, le second bloc de roulement est maintenu par le flasque du réducteur de telle manière que l'axe longitudinal de symétrie du roulement associé au second bloc de roulement soit confondu avec l'axe de rotation du moteur.

Le roulement associé au premier bloc de roulement est lubrifié par exemple par graissage.

Le liquide de lubrification du flasque du réducteur est de préférence de l'huile qui est utilisée pour lubrifier le second bloc de roulement 7.

Conformément à une autre caractéristique essentielle de l'ensemble moto-réducteur de l'invention, le flasque du réducteur est refroidi par ventilation forcée.

Le flasque du réducteur de l'ensemble moto-réducteur peut alors être refroidi par une partie de la ventilation forcée dudit flasque du moteur.

Pour ce faire, l'ensemble moto-réducteur comprend un premier capot de ventilation 10 sur la partie supérieure du flasque du réducteur et un second capot de ventilation 11 par exemple sur la partie supérieure du flasque du moteur.

Une arrivée d'air pulsé 14 est disposé, par exemple, dans la partie supérieure des capots de ventilation.

La partie supérieure du flasque du réducteur est alors refroidie par ventilation forcée alors que sa partie inférieure est refroidie par ventilation naturelle.

Dans le but d'augmenter l'échange calorifique dans la partie inférieure du flasque du réducteur de l'ensemble moto-réducteur, des ailettes 12 de refroidissement constituent la paroie inférieure du flasque du réducteur.

A titre d'exemple, l'alimentation en air du côté du moteur a par exemple un débit d'entrée de l'ordre de 1,25 m3/s et la température de l'air est de l'ordre de 40°C.

L'alimentation en air du côté du réducteur a par exemple un débit d'entrée de l'ordre de 0,5 m3/s. La température de l'air est de l'ordre de 40°C et sa vitesse est de l'ordre de 10m/s.

Lorsque le moto-réducteur de l'invention est appliqué à un train à grande vitesse, la vitesse de l'air dans la zone inférieure refroidie par ventilation naturelle est fonction de la vitesse du train qui est par exemple de 350 km/h.

La figure 2 est une vue de la face du flasque du réducteur disposée côté moteur.

Cette figure 2 permet de distinguer le pignon de sortie 4 et la roue intermédiaire 5.

Un joint frontal 13 est maintenu entre les faces des flasques du moteur et du réducteur en contactes, par exemple au moyen d'une rainure 15 réalisée sur la face du flasque du réducteur disposée côté moteur. Ce joint d'étanchéité est essentiel pour l'isolation entre l'intérieur des flasques du moteur et du réducteur et le milieu extérieur.

Les capots de ventilation du moteur et du réducteur sont de préférence en aluminium.

## Revendications

1. Ensemble moto-réducteur comprenant:
- un moteur circulaire (1) dont l'arbre d'entraînement (2) est couplé à un pignon moteur (3) dans le but de transmettre le mouvement de rotation de l'arbre d'entraînement à un pignon de sortie (4) par l'intermédiaire d'une roue intermédiaire (5) couplée audit pignon moteur et audit pignon de sortie,
- un premier (6) et un second (7) bloc de roulements disposés sur l'arbre d'entraînement, respectivement, de part et d'autre du moteur circulaire,
- un flasque du moteur (8), disposé autour dudit moteur circulaire, maintenant ledit premier bloc de roulements, et
- un flasque du réducteur (9) disposé autour desdits pignons moteur et de sortie et de ladite roue intermédiaire,
- lesdits premier (6) et second (7) bloc de roulements étant disposés, respectivement, de part et d'autre du moteur circulaire (1) et du pignon moteur (3),
- ledit second bloc de roulements (7) étant maintenu par ledit flasque du réducteur (9), et
- ledit flasque du réducteur étant refroidi par ventilation forcée,
caractérisé en ce que ledit flasque du réducteur est refroidi par une partie de la ventilation forcée dudit flasque du moteur.

2. Ensemble moto-réducteur selon la revendication 1, dans lequel sa partie supérieure est refroidie par ventilation forcée et sa partie inférieure est refroidie par ventilation naturelle.

3. Ensemble moto-réducteur selon la revendication 2, comprenant des ailettes de refroidissement dans la partie inférieure dudit flasque du réducteur.

4. Ensemble moto-réducteur selon l'une quelconque des revendications 2 et 3, comprenant un premier capot de ventilation (10) sur la partie supérieure dudit flasque du réducteur et un second capot de ventilation (11) sur la partie supérieure dudit flasque du moteur.

5. Ensemble moto-réducteur selon l'une quelconque des revendications 1 à 4, comprenant un joint frontal maintenu entre les faces desdits flasques du moteur et du réducteur en contact.

## Patentansprüche

1. Einheit aus Motor und Untersetzungsgetriebe, die aufweist:
- einen Kreismotor (1), dessen Antriebswelle (2) mit einem Antriebsritzel (3) gekoppelt ist, um die Drehbewegung der Antriebswelle über ein Zwischenzahnrad (5), das mit dem Antriebsritzel und einem Ausgangsritzel gekoppelt ist, auf das Ausgangsritzel (4) zu übertragen,
- einen ersten (6) und einen zweiten Lagerblock (7), die auf der Antriebswelle zu beiden Seiten des Kreismotors angeordnet sind,
- ein Motorschild (8), das um den Kreismotor herum angeordnet ist und den ersten Lagerblock hält,
- und ein Untersetzungsgetriebe-Schild (9), das um die Antriebs- und Ausgangsritzel und das Zwischenzahnrad herum angeordnet ist,
- wobei der erste (6) und der zweite Lagerblock (7) zu beiden Seiten des Kreismotors (1) und des Antriebsritzels (3) angeordnet sind,
- wobei der zweite Lagerblock (7) vom Untersetzungsgetriebe-Schild (9) gehalten wird,
- und das Untersetzungsgetriebe-Schild durch Zwangsbelüftung gekühlt wird,
dadurch gekennzeichnet, daß das Schild des Untersetzungsgetriebes durch einen Teilstrom der Zwangsbelüftung des Motorschilds gekühlt wird.

2. Einheit nach Anspruch 1, bei dem ihr oberer Bereich durch Zwangsbelüftung und ihr unterer Bereich durch natürliche Belüftung gekühlt wird.

3. Einheit nach Anspruch 2, die Kühlrippen im unteren Bereich des Untersetzungsgetriebe-Schilds aufweist.

4. Einheit nach einem beliebigen der Ansprüche 2 und 3, die eine erste Belüftungshaube (10) auf dem oberen Teil des Untersetzungsgetriebe-Schilds und eine zweite Belüftungshaube (11) auf dem oberen Teil des Motorschilds besitzt.

5. Einheit nach einem beliebigen der Ansprüche 1 bis 4, die eine stirnseitige Dichtung aufweist, die zwischen den sich berührenden Stirnseiten der Schilde des Motors und des Untersetzungsgetriebe gehalten wird.

## Claims

1. Motor-gearbox unit comprising:
- a circular motor (1) whose drive shaft (2) is coupled to a drive gear (3) to transmit rotational movement of the drive shaft to an output gear (4) through the intermediary of an intermediate gear (5) coupled to said drive gear and to said output gear,
- first and second bearing assemblies (6, 7) disposed on the drive shaft on respective sides of the circular motor,
- a motor flange (8) disposed around said circular motor and supporting said first bearing assembly, and
- a gearbox flange (9) disposed around said drive and output gears and said intermediate gear,
- said first and second bearing assemblies (6, 7) being disposed on respective sides of the circular motor (1) and the drive gear (3),
- said second bearing assembly (7) being supported by said gearbox flange (9), and
- said gearbox flange being cooled by forced ventilation,
characterised in that said gearbox flange is cooled by part of the forced ventilation of said motor flange.

2. Motor-gearbox unit according to claim 1 wherein its upper part is cooled by forced ventilation and its lower part is cooled by natural ventilation.

3. Motor-gearbox unit according to claim 2 comprising cooling fins in the lower part of said gearbox flange.

4. Motor-gearbox unit according to claim 2 or claim 3 comprising a first ventilation cover (10) on the upper part of said gearbox flange and a second ventilation cover (11) on the upper part of said motor flange.

5. Motor-gearbox unit according to any one of claims 1 to 4 comprising a front seal held between the contacting surfaces of said motor and gearbox flanges.
